(19) Europäisches Patentamt
European Patent Office
Office européen des brevets

(11) Numéro de publication: 0 012 703
B1

(12) **FASCICULE DE BREVET EUROPEEN**

(45) Date de publication du fascicule de brevet: 04.11.81

(51) Int. Cl.³: C 07 F 9/165, A 01 N 57/10

(21) Numéro de dépôt: 79420068.3

(22) Date de dépôt: 11.12.79

(54) **Dérivés de phosphates de N-phényle N-(alcoxycarbonylalcoyle)acétamides, procédé pour leur préparation et les compositions fongicides les contenant.**

(30) Priorité: 14.12.78 FR 7835866

(43) Date de publication de la demande: 25.06.80 Bulletin 80/13

(45) Mention de la délivrance du brevet: 04.11.81 Bulletin 81/44

(84) Etats Contractants Désignés: BE CH DE FR GB IT LU NL

(56) Documents cités: US - A - 3 517 089

(73) Titulaire: RHONE-POULENC AGROCHIMIE
14-20 rue Pierre Baizet
F-69009 Lyon (FR)

(72) Inventeur: Abblard, Jean
42 rue Pasteur
F-69370 St. Didier au Mont d'Or (FR)
Inventeur: Lacroix, Guy
332 C Balmont - La Duchère
F-69009 Lyon (FR)

(74) Mandataire: Brachotte, Charles
RHONE-POULENC AGROCHIMIE BP 9163-09
F-69263 Lyon Cedex 1 (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Dérivés de phosphates de N-phényle N-(alcoxycarbonylalcoyle)acétamides, procédé pour leur préparation et les compositions fongicides les contenant

La présente invention concerne de nouveaux phosphates de N-(phényle substitué) N-(alcoxycarbonylalcoyle) acétamides, des procédés d'obtention de ces composés et l'utilisation de ces derniers comme matières actives de compositions utilisables pour la protection des plantes contre les champignons.

Il a déjà été décrit (brevet Etats-Unis d'Amérique No. 3 517 089) des dithiophosphates de N-phényle N-(alcoxycarbonylalcoyle) acétamides mais ces composés sont simplement des composés à propriétés insecticides et ils ne sont pas substitués sur le noyau phényle.

La présente invention a pour objet une nouvelle famille de composés de ce groupe présentant des substituants particuliers sur le noyau phényle et des propriétés biologiques originales à savoir une action fongicide remarquable révélant de surcroît de surprenantes propriétés systémiques.

Plus particulièrement, l'invention concerne de nouveaux composés de formule générale:

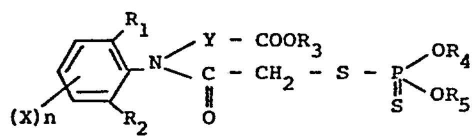

(I)

dans laquelle:

— X est un atome d'halogène, un radical alcoyle contenant de 1 à 4 atomes de carbone,

— Y est le groupe $—CH_2—$ ou

$$\begin{array}{c} CH_3 \\ | \\ —CH—, \end{array}$$

— n est 0, 1, 2 ou 3,

— $R_1$, $R_2$ sont séparément un atome d'halogène, un radical alcoyle ou alcoxy, dont la partie alcoyle contient de 1 à 4 atomes de carbone,

— $R_3$ est un alcoyle contenant de 1 à 4 atomes de carbone,

— $R_4$ et $R_5$ sont des radicaux alcoyle éventuellement halogénés ou alcoxylés contenant de 1 à 18 atomes de carbone.

Une classe préférée de composés présente la formule générale:

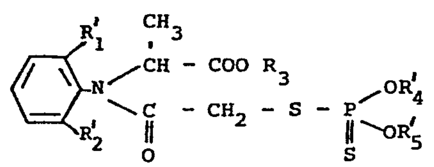

(II)

dans laquelle $R'_1$ et $R'_2$, identiques ou différents, sont un atome d'halogène ou le radical méthyle, $R_3$ a la même signification que précédemment et $R'_4$ et $R'_5$ sont des radicaux alcoyle, éventuellement alcoxylés, contenant de 1 à 18 atomes de carbone et dont les divers atomes de carbone sont seulement des atomes de carbone primaires ou secondaires ou tertiaires.

Les composés de formule générale (I) peuvent être préparés selon plusieurs procédés.

Un premier procédé consiste à effectuer la réaction d'acylation selon le schéma suivant:

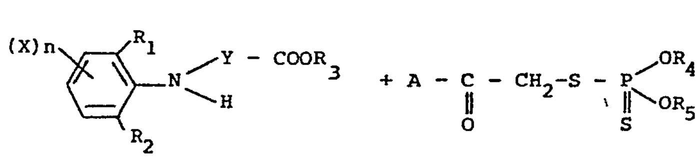

(III) (IV)

→ (I) + HA

dans lequel A est un atome d'halogène ou le radical hydroxyle, les autres substituants ayant la même signification que précédemment.

Cette réaction peut être effectuée en présence ou non d'un solvant inerte tel que, en particulier les hydrocarbures aliphatiques ou aromatiques tels que le benzène, le toluène, les xylènes, l'éther de pétrole; des hydrocarbures halogénés tels que le chlorobenzène, le chlorure de méthylène, le chlorure d'éthylène, le chloroforme; des éthers tels que l'éther diéthylique, le dioxanne, le tétrahydrofuranne; des

nitriles tels que l'acétonitrile; des amides tels que le diméthylformamide, le diméthylacétamide; le diméthylsulfoxyde; des cétones telles que la méthyléthylcétone et les mélanges de ces solvants entre eux.

Les températures réactionnelles sont comprises entre 0 et 180°C et de préférence entre 20 et 120°C. Dans bien des cas, l'utilisation d'accepteurs d'acide ou d'agents de condensation est avantageuse. Comme tels on envisage des amines tertiaires telles que trialcoylamines (par exemple la triéthylamine), la pyridine et des bases pyridiniques ou des bases inorganiques telles que les oxydes et hydroxydes, les bicarbonates et carbonates des métaux alcalins, et alcalino-terreux ainsi que l'acétate de sodium. On peut se servir en outre, comme accepteur d'acide dans le premier procédé, d'un excès du dérivé particulier d'aniline de formule (III).

On peut également conduire le procédé de préparation à partir des composés de formule (II) sans accepteur d'acide, étant donné que dans certains cas, il est indiqué de faire passer un courant d'azote pour déplacer l'halogénure d'hydrogène formé.

Dans d'autres cas, une addition de diméthylformamide comme catalyseur de réaction est très avantageuse.

On peut obtenir des détails pour la préparation de produits intermédiaires de formule (III) à partir de procédés qui ont été donnés en général pour la préparation des esters d'acides anilino-alcane carboxyliques dans les publications suivantes:

— J. Org. Chem. *30* p. 4101 (1965)

— Tetrahedron 1967, p. 487 et 493.

Les dérivés (IV) de l'acide dithiophosphonylacétiques (ou acide dialkcoxyphosphinothioylmercaptoacétique) sont obtenus d'une manière en soi connue par réaction d'un sel alcalin, d'un dithiophosphate sur un acide monohalogéné, selon la schéma:

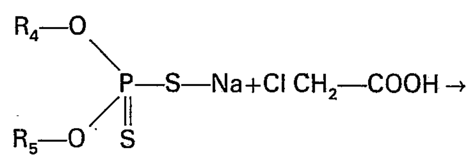

(IV)

l'acide étant ensuite converti, le cas échéant, en un dérivé fonctionnel tel que chlorure ou anhydride d'acide.

Selon un second procédé de fabrication des composés de formula (I), on fait réagir un N-(phényle substitué) N-(alcoxy-carbonyle alcoyle) halogéno acétamide sur un sel alcalin ou d'ammonium de l'acide dithiophosphorique selon le schéma:

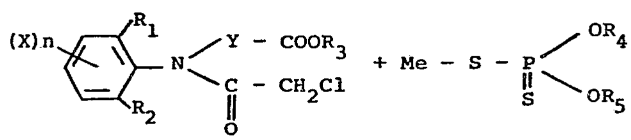

(V)

→ (I) + MeCl

dans lequel Me représente un atome de métal alcalin ou le groupe ammonium, les autres substituants ayant la même signification que dans la formule (I), la réaction peut être effectuée dans un solvant commun organique inerte tel que acétone, méthyléthylcétone, benzène, diméthylformamide et tétrachlorure de carbone.

La réaction peut être catalysée notamment par l'iodure de sodium.

Les composés de formule (V) peuvent eux-mêmes être obtenus par monohalogénoacétylation des composés de formule (III). Les composés illustrés ci-après dans les tableaux 1 à 3 ont été obtenus selon le premier procédé, selon le mode opératoire décrit ci-après pour la N-[(méthoxycarbonyl)-1 éthyl]-N-[S-(O,O-di-n-propyl phosphonothioyl) mercapto acétyl]diméthyl-2,6 aniline (composé No. 1).

On chauffe à reflux, pendant 1 heure, 6,2 g (0,03 mole) de N-[(méthoxycarbonyl-1 éthyl]diméthyl-2,6 aniline en solution dans 100 ml de toluène avec 8,7 g (0,03 mole) de chlorure de S - (O,O-dipropylphosphonothioyl) mercaptoacétyle. L'acide chlorhydrique formé se dégage. Après refroidissement la phase organique est lavée avec successivement 100 ml d'eau, 100 ml de bicarbonate de sodium à 5% et deux fois 100 ml d'eau. Après séchage de la solution au sulfate de sodium anhydre, le toluène est éliminé sous pression réduite. Les impuretés volatiles sont éliminées par distillation moléculaire à 90°C sous 0,13 mbar ($10^{-2}$ mm de Hg). 11 g du produit 1 sont ainsi récupérés (Rdt = 79,5%).

Dans les divers tableaux 1 à 3, la signification de X, n, $R_1$ et $R_2$ a été donnée dans la seconde colonne par représentation globale de la partie de molécule

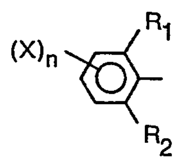

Tous les produits mentionnés dans les tableaux 1 à 3 sont des produits dans la formule desquels $R_3$ représente le groupe méthyle et Y représente le groupe

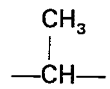

sauf le produit 13, dans lequel Y représente le groupe méthylène.

L'abréviation "Rdt" signifie "rendement"; F désigne le point de fusion; $n_D^{20}$ désigne l'indice de réfraction mesuré à 20°C pour la raie D du sodium.

TABLEAU 1

| n° | 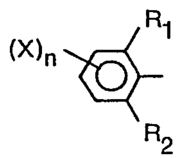 | $R_4 = R_5$ | Rdt | Constantes physiques | Analyse élémentaire ler chiffre : valeur calculée ; 2ème chiffre : valeur trouvée C % | H % | N % | P % | S % |
|---|---|---|---|---|---|---|---|---|---|
| 1 | 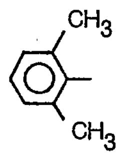 | $n-C_3H_7$ | 79,5 % | $n_D^{20}$ = 1,537 | C. 52,06<br>T. 52,21 | 6,94<br>6,96 | 3,04<br>3,12 | 6,72<br>7,49 | |
| 2 | 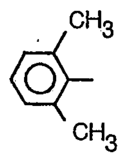 | $C_2H_5$ | 45 % | F = 64°C | C. 49,87<br>T. 49,96 | 6,51<br>6,63 | 3,23<br>3,21 | 7,17<br>7,08 | |
| 3 | 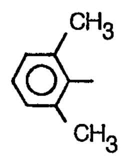 | iso $C_3H_7$ | 48 % | $n_D^{20}$ = 1,533 | C. 52,06<br>T. 52,15 | 6,94<br>6,95 | 3,04<br>3,25 | 6,72<br>6,70 | |
| 4 | 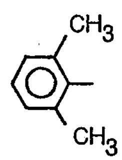 | n-$C_4H_9$ | 41 % | $n_D^{20}$ = 1,529 | C. 53,99<br>T. 53,38 | 7,36<br>7,45 | 2,86<br>2,92 | 6,34<br>6,45 | 13,09<br>13,94 |
| 5 | 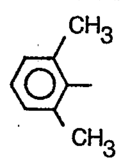 | sec-$C_4H_9$ | 41 % | $n_D^{20}$ = 1,530 | C. 53,99<br>T. 53,57 | 7,36<br>7,47 | 2,86<br>2,73 | 6,34<br>6,35 | 13,09<br>12,93 |
| 6 | 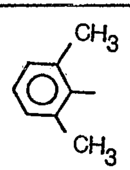 | iso $C_4H_9$ | 58 % | F = 70°C | C. 53,99<br>T. 54,17 | 7,36<br>7,36 | 2,86<br>2,76 | 6,34<br>6,83 | |

TABLEAU 2

| n° | 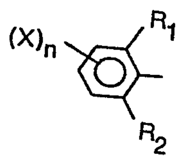 | $R_4 = R_5$ | Rdt | Constantes physiques | Analyse élémentaire<br>Ier chiffre : valeur calculée ; 2ème chiffre : valeur trouvée | | | | | |
|---|---|---|---|---|---|---|---|---|---|---|
| | | | | | C % | H % | N % | P % | S % | Cl % |
| 7 | 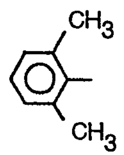 | $CH_3O(CH_2)_2-$ | 91 % | $n_D^{20}$ = 1,5385 | C. 48,68<br>T. 49,28 | 6,49<br>6,56 | 2,84<br>2,72 | 6,29<br>6,22 | 12,98<br>13,20 | |
| 8 | 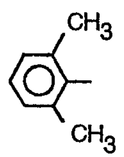 | $Cl(CH_2)_2-$ | 27 % | F = 78°C | C. 43,03<br>T. 43,57 | 5,18<br>5,24 | 2,79<br>2,73 | 6,17<br>6,14 | 12,75<br>13,21 | 14,14<br>13,93 |
| 9 | 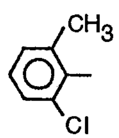 | $isoC_4H_9-$ | 63 % | $n_D^{20}$ = 1,533 | C. 49,46<br>T. 50,54 | 6,48<br>6,62 | 2,75<br>2,48 | 6,08<br>6,17 | 12,56<br>12,50 | 6,97<br>6,87 |
| 10 | 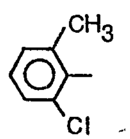 | $n\ C_3H_7-$ | 68 % | $n_D^{20}$ = 1,5428 | C. 47,35<br>T. 47,76 | 6,02<br>6,11 | 2,91<br>2,90 | 6,44<br>6,44 | 13,29<br>13,29 | 7,37<br>7,48 |
| 11 | 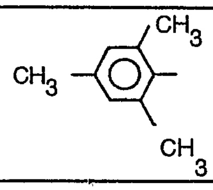 | $C_2H_5-$ | 31 % | $n_D^{20}$ = 1,542 | C. 50,99<br>T. 52,68 | 6,76<br>6,65 | 3,13<br>3,44 | 6,92<br>6,00 | | |
| 12 | 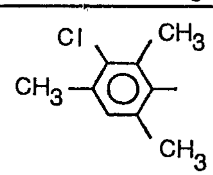 | $C_2H_5-$ | 41,5 % | $n_D^{20}$ = 1,554 | C. 47,35<br>T. 48,70 | 6,06<br>6,13 | 2,91<br>2,85 | 6,43<br>5,66 | | |

TABLEAU 3

| n° | 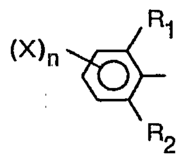 | $R_4 = R_5$ | Y | Rdt en % | Constantes physiques | Analyse élémentaire<br>1er chiffre : valeur calculée ; 2ème chiffre : valeur trouvée<br>C % | <br><br>H % | <br><br>N % | <br><br>P % | <br><br>S % |
|---|---|---|---|---|---|---|---|---|---|---|
| 13 | 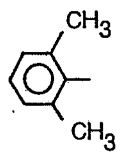 | $C_2H_5-$ | $-CH_2-$ | 54 | F = 76,4°C | 48,69<br>48,92 | 6,20<br>6,29 | 3,34<br>3,37 | 7,40<br>7,35 | 15,27<br>15,33 |
| 14 | 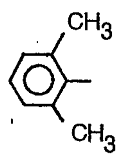 | $n-C_5H_{11}-$ | $CH_3$<br>\|<br>$-CH-$ | 77 | $n_D^{20}$ = 1,529 | 55,71<br>54,83 | 7,74<br>7,73 | 2,71<br>2,68 | 6,0<br>6,0 | 12,38<br>12,22 |
| 15 | 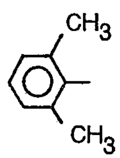 | iso-$C_5H_{11}-$ | $CH_3$<br>\|<br>$-CH-$ | 65 | $n_D^{20}$ = 1,525 | 55,71<br>54,93 | 7,74<br>7,73 | 2,71<br>2,81 | 6,0<br>5,6 | 12,38<br>10,77 |
| 16 | 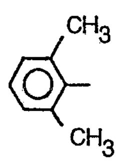 | n-$C_{12}H_{25}-$ | $CH_3$<br>\|<br>$-CH-$ | 88 | $n_D^{20}$ = 1,502 | 63,96<br>63,65 | 9,54<br>9,54 | 1,96<br>1,92 | 4,35<br>4,27 | 8,98<br>8,36 |
| 17 | 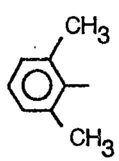 | néo-$C_5H_{11}-$ | $CH_3$<br>\|<br>$-CH-$ | 39 | F = 88°C | 55,71<br>55,94 | 7,74<br>7,79 | 2,71<br>2,75 | 6,0<br>6,59 | 12,38<br>12,12 |

Les propriétés fongicides des composés selon l'invention sont illustrées par les exemples 1 à 5 ci-après; aucun composé testé n'a présenté de phytotoxicité.

Exemple 1

*Test in vivo sur Plasmopara viticola sur plants de vigne* (traitement préventif).

On traite, par pulvérisation au pistolet, des plants de vigne (cépage:Gamay) cultivés en pots, sur la face inférieure des feuilles, avec une solution acétonique de la matière active ou une suspension aqueuse d'une poudre mouillable ayant la composition pondérale suivante:

| | |
|---|---|
| — matière active à tester | 20% |
| — défloculant (lignosulfate de calcium) | 5% |
| — mouillant (alcoylarylsulfonate de sodium) | 1% |
| — charge (silicate d'aluminium) | 74% |

à la dilution voulue, contenant la matière active à tester à la dose considérée; chaque test fait l'objet de trois répétitions.

Au bout de 48 heures, la contamination est effectuée par pulvérisation, sur la face inférieure des feuilles d'une suspension aqueuse de 80 000 unités/$cm^3$ environ de spores du champignon. Ensuite, les pots sont placés pendant 48 heures en cellule d'incubation à 100% d'humidité relative et à 20°C.

On effectue le contrôle des plants 9 jours après l'infestation.

Dans ces conditions, on observe qu'à la dose de 0,25 g/l les composés 1 à 7, 10, et 14 à 16 exercent une protection totale (> 95%), les composés 9 et 13 exercent une bonne protection (de 75 à 95%), les composés 11 et 12 exercent une protection moyenne (de 50 à 60%). Plusieurs de ces composés exercent également une bonne activité sur mildiou à des doses très inférieures à 0,25 g/l (par exemple les composés 1,2,3,5,6,7,9,16 exercent encore une protection totale à la dose de 63mg/l).

Par ailleurs, dans tous ces essais, aucun phénomène de phytotoxicité sur les plants n'a été observé.

Exemple 1b

*Test in vivo de systémie par absorption racinaire sur le mildiou de la vigne*

Plusieurs boutures de vigne (cépage: Gamay) sont placées dans des flacons contenant une solution nutritive. On arrose ces jeunes plants de vigne avec 100 $cm^3$ d'une solution aqueuse à 0,5 g/l de la matière à tester. Au bout de 5 jours, on contamine la vigne avec une suspension aqueuse contenant 100 000 spores/$cm^3$ de *Plasmopara viticola.* On laisse incuber pendant 48 heures dans une chambre à 20°C et à 100% d'humidité relative. L'observation du degré d'infestation à lieu au bout de 9 jours environ, par rapport à un témoin infesté, qui a été arrosé avec 40 $cm^3$ d'eau distillée.

Dans ces conditions, on observe que le composé 2, absorbé par les racines, exerce une protection totale des feuilles de la vigne contre le mildiou, ce qui montre bien le caractère systémique de ce composé.

Exemple 2

*Test in vivo sur Phytophtora infestans sur feuilles de tomates en survie*

Des plants de tomates (variété: Marmande) cultivés en serre et âgés de 60 à 75 jours, sont traités par pulvérisation avec une suspension à 2 g/l de matière active du produit à tester.

Au bout de 48 heures, les feuilles sont coupées et mises dans des boîtes de Pétri (diamètre: 11 cm) dont le fond a été préalablement garni d'un papier filtre humide (5 folioles/boîte; 2 boîtes/produit/dose). L'inoculum èst ensuite apporté par le dépôt de tampons de papier-filtre (diamètre : 9 mm) imbibés d'une suspension de spores (3 tampons/foliole). La suspension de spores (zoo sporanges) est obtenue à partir d'une culture pendant 20 jours de *Phytophtora infestans* sur milieu à base de farine de pois chiches.

L'essai est maintenu à 16°C pendant 8 jours.

La lecture se fait par évaluation de la surface envahie par le champignon.

Dans ces conditions, on observe que le composé No. 2 exerce une protection totale des feuilles de tomate.

Exemple 3

*Test in vivo sur Peronospora tabacina sur tabac*

Des plants de tabac (variété: PBD6) cultivés en serre et âgés d'un mois, sont traités préventivement sur la face inférieure des feuilles à l'aide d'une suspension poudre mouillable, de même composition que celle décrite à l'exemple 1. La contamination a lieu 48 heures plus tard, par pulvérisation, sur la face inférieure, d'une suspension de spores de Peronospora (100 000 sp/ml).

Les plants de tabac sont ensuite placés dans une enceinte à 100% d'humidité relative, à une température de 20 à 25°C pendant 48 heures. L'observation a lieu dans une cellule en toile plastique garantissant une humidité relative de 80 à 100%. La lecture est faite 6 jours après contamination.

Dans ces conditions, on observe qu'à la dose de 250 ppm le composé No 2 exerce une protection totale des plants de tabac, accompagnée d'une absence complète de phytotoxicité.

Exemple 4

*Test in vivo sur Erysiphe graminis sur orge*

De l'orge, en godets, semée dans de la terre franche, est traitée au stade 10 cm de hauteur par pulvérisation d'une poudre mouillable, de même composition que celle décrite à l'exemple 1. L'essai s'effectue en deux répétitions par dose. Au bout de 48 heures, on saupoudre les plants d'orge avec des spores d'Erysiphe graminis à partir de plants malades.

La lecture se fait 12 jours après la contamination.

Dans ces conditions, on observe que les composés 1, 2, 4, 5, 7, 9 et 10 exercent une assez bonne protection (de 50 à 75%) des plants d'orge.

Exemple 5

*Test in vivo sur Uromices phaseoli* responsable de la rouille du haricot.

Des plants de haricots sont cultivés en godets de 8 cm de diamètre.

Au stade deux feuilles cotylédonaires, les plants sont traités par pulvérisation avec les produits à étudier, à la dose voulue.

Au bout de 48 heures, on contamine les haricots avec une suspension de spores (50 000 sp/$cm^3$) obtenue à partir de plants contaminés. On place ensuite les haricots en cellule climatique réglée de la façon suivante:

| | |
|---|---|
| — Eclairement | 16 H |
| — Température jour | 20°C |
| — Température nuit | 15°C |
| — Humidité relative | 100% |

pendant 48 heures, ensuite on ramène l'humidité à 80%.

Le contrôle se fait le 15ème jour après la contamination, par comparaison avec le témoin non traité.

Dans ces conditions, on observe que les composés 1, 4, 6 et 9 et 16 exercent une bonne protection (de 60 à 95%) des plants de haricots contre la rouille. Le composé 5 exerce une protection moyenne (50%).

Les exemples précédents illustrent clairement les remarquables propriétés fongicides des composés selon l'invention, sur des espèces très variées de champignons, que ce soit des phycomycètes (mildiou), ascomycètes (oïdium) ou les basidiomycètes (rouille), ainsi que leur absence de phytotoxicité. Ces composés peuvent donc être utilisés pour la lutte, tant préventive que curative, contre les maladies fongiques, notamment celles dues aux champignons ci-dessus, des plantes en général et, en particulier, de la vigne, du tabac, du houblon et de la tomate, des céréales et cucurbitacées.

Les doses d'emploi peuvent varier dans de larges limites selon la virulence du champignon et les conditions climatiques.

D'une manière générale, des compositions contenant de 0,001 á 5 g/l de matière active conviennent bien.

Pour leur emploi dans la pratique, les composés selon l'invention sont rarement utilisés seuls. Le plus souvent, ils font partie de compositions qui comprennent, en général, en plus de la matière active selon l'invention, un support et/ou un agent tensioactif.

Le terme "support" au sens de la présente description désigne une matière organique ou minérale, naturelle ou synthétique, avec laquelle la matière active est associée pour faciliter son application sur la plante, sur des graines ou sur le sol, ou son transport, ou sa manipulation. Ce support doit donc être inerte et acceptable en agriculture, notamment par la plante. Le support peut être solide (argiles, silicates naturels ou synthétiques, résines, cires, engrais solides . . . ) ou liquide (eau, alcools, cétones, fractions de pétrole, hydrocarbures chlorés, gaz liquéfiés).

L'agent tensioactif peut être un agent émulsionnant, dispersant ou mouillant, pouvant être ionique ou non ionique. On peut citer, par exemple, des sels d'acides polyacryliques, d'acides lignine sulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés.

La présence d'au moins un agent tensioactif est indispensable lorsque le support inerte est un liquide.

Les compositions selon l'invention peuvent être préparées sous la forme de poudres mouillables, de poudres solubles, de poudres pour poudrages, granulés, de solutions, en particulier de solutions aqueuses, de concentrés émulsionnables, d'émulsions, de concentrés en suspension et d'aérosols. Elles contiennent généralement entre 0,0001 et 95% (en poids) de matière active.

Les poudres mouillables sont habituellement préparées de manière qu'elles contiennent de 20 à 95% en poids de matière active et elles contiennent habituellement, en plus du support solide, de 0 à 5% en poids d'un agent mouillant, de 3 à 10% en poids d'un agent dispersant, et, quand c'est nécessaire, de 0 à 10% en poids d'un ou de stabilisants et/ou d'autres additifs, comme des agents de

pénétration, des adhésifs ou des agents antimottants, colorants etc.

A titre d'exemple, voici la composition d'une poudre mouillable:

| | |
|---|---|
| — matière active (composé 5) | 50% |
| — lignosulfonate de calcium (défloculant) | 5% |
| — isopropylnaphtalène sulfonate (agent mouillant anionique) | 1% |
| — silice antimottante | 5% |
| — kaolin (charge) | 39% |

Les granulés destinés à être disposés sur le sol sont habituellement préparés de manière qu'ils aient des dimensions comprises entre 0,1 et 2 mm et ils peuvent être fabriqués par agglomération ou imprégnation. En général, les granulés contiendront de 0,5 à 25% de matière active et de 0 à 10% en poids d'additifs comme des stabilisants, des agents de modification à libération lente, des liants et des solvants.

Les concentrés émulsionnables applicables en pulvérisation contiennent habituellement 10 à 50% en poids/volume de matière active et, en plus du solvant, quand c'est nécessaire, de 2 à 20% en poids/volume d'additifs appropriés, comme des stabilisants, des agents de pénétration, des inhibiteurs de corrosion, et des colorants et des adhésifs.

A titre d'exemple, voici la composition d'un concentré émulsionnable, les quantités étant exprimées en g/litre:

| | | |
|---|---|---|
| — matière active (composé 7) | | 400 g/l |
| — dodécylbenzène sulfonate alcalin | | 24 g/l |
| — nonylphénol oxyéthylé à 10 molécules d'oxyde d'éthylène | | 16 g/l |
| — cyclohexanone | | 200 g/l |
| — solvant aromatique | q.s.p. | 1 litre |

Les concentrés en suspension, également applicables en pulvérisation, sont préparés de manière que l'on obtienne un produit fluide stable ne se déposant pas et ils contiennent habituellement de 10 à 75% en poids de matière active, de 0,5 à 15% en poids d'agents tensioactifs, de 0,1 à 10% en poids d'agents thixotropes, de 0 à 10% d'additifs appropriés, comme des anti-mousses, des inhibiteurs de corrosion, des stabilisants, des agents de pénétration et des adhésifs et comme support, de l'eau ou un liquide organique dans lequel la matière active est sensiblement insoluble: certaines matières solides organiques ou des sels minéraux peuvent être dissoutes dans le support pour aider à empêcher la sédimentation ou comme antigels pour l'eau.

Des dispersions et émulsions aqueuses, par exemple, des compositions obtenues en diluant à l'aide d'eau une poudre mouillable ou un concentré émulsionnable selon l'invention sont comprises dans le cadre général de la présente invention. Les émulsions peuvent être du type eau-dans-l'huile ou du type huile-dans-l'eau et elles peuvent avoir une consistance épaisse comme celle d'une "mayonnaise".

Les compositions selon l'invention peuvent contenir d'autres ingrédients, par exemple, des colloïdes protecteurs, des adhésifs ou épaississants, des agents thixotropes, des stabilisants ou sequestrants ainsi que d'autres matières actives connues à propriétés pesticides, en particulier insecticides ou fongicides.

**Revendications**

1. Composés de formule générale:

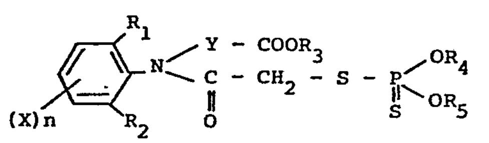

(I)

dans laquelle:

— X est un atome d'halogène ou un radical alcoyle contenant de 1 à 4 atomes de carbone,

— n est 0, 1, 2 ou 3,

— Y est le groupe $—CH_2—$ ou

$$\begin{array}{c} CH_3 \\ | \\ —CH— \end{array}$$

— $R_1$, $R_2$ sont séparément un atome d'halogène, un radical alcoyle ou alcoxy dont la partie alcoyle contient de 1 à 4 atomes de carbone.

— $R_3$ est un alcoyle contenant de 1 à 4 atomes de carbone.

— $R_4$ et $R_5$ sont des radicaux alcoyle, éventuellement halogène ou alcoxylé, contenant de 1 à 18 atomes de carbone.

2. Composés selon la revendication 1, de formule générale:

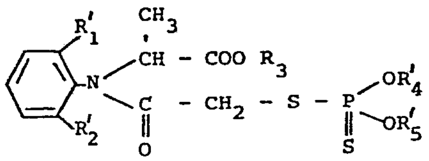

(II)

dans laquelle:

— $R'_1$ et $R'_2$, identiques ou différents, sont un atome d'halogène ou le radical méthyle,

— $R_3$ est un radical alcoyle ayant de 1 à 4 atomes de carbone,

— $R'_4$ et $R'_5$ sont des radicaux alcoyle, éventuellement alcoxylés, contenant de 1 à 18 atomes de carbone et dont les divers atomes de carbone sont seulement des atomes de carbone primaires ou secondaires ou tertiaires.

3. Composés selon la revendication 2 de formule:

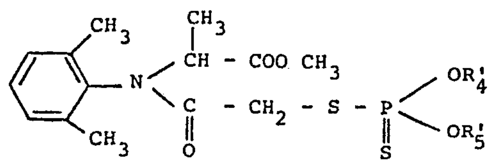

dans laquelle:

— $R'_4$ et $R'_5$ sont un radical alcoyle ou alcoxy alcoyle de 2 à 12 atomes de carbone.

4. Procédé de fabrication de composés selon la revendication 1, caractérisé en ce qu'on effectue la réaction selon le schéma suivant:

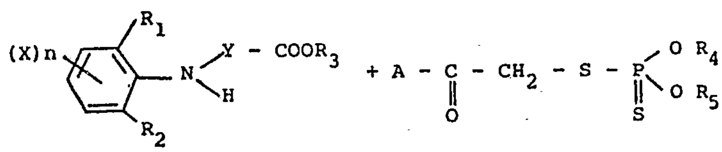

→ (I) + HA

dans laquelle A est un atome d'halogène ou le radical hydroxyle.

5. Procédé selon la revendication 4, caractérisé en ce qu'on fait la réaction suivant le schéma suivant:

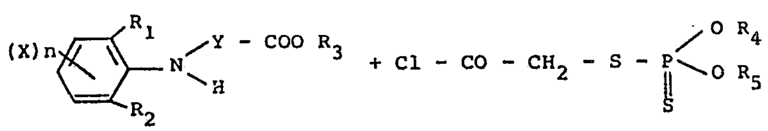

→ (I) + HCl

6. Procédé pour la préparation de composés selon la revendication 1, caractérisé en ce qu'on effectue la réaction selon le schéma suivant:

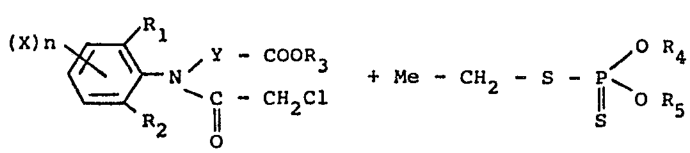

→ (I) + MeCl

dans lequel:

— Me est un atome de métal alcalin ou le groupe ammonium.

7. Composition fongicide pour la protection des plantes contre les maladies fongiques caractérisée en ce qu'elle contient comme matière active un composé selon l'une des revendications 1 à 3 en association avec les supports inertes et/ou les agents tensioactifs usuels.

8. Composition fongicide selon la revendication 7, caractérisée en ce qu'elle contient de 0,0001 à 95% du composé selon la revendication 1.

9. Procédé de lutte contre les maladies fongiques des plantes, caractérisé en ce qu'on utilise une composition selon l'une des revendications 7 ou 8.

**Patentansprüche**

1. Neue Verbindungen der allgemeinen Formel I

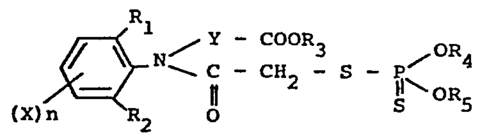

(I)

worin X ein Halogenatom, ein Alkylrest mit 1 bis 4 Kohlenstoffatomen ist,
n die Bedeutung von 0, 1, 2 oder 3 hat,
Y die Gruppe $-CH_2-$ oder

$$\begin{array}{c} CH_3 \\ | \\ -CH- \end{array}$$

darstellt,
$R_1$ und $R_2$ unabhängig voneinander ein Halogenatom, einen Alkyl- oder Alkoxyrest, wobei der Alkylteil 1 bis 4 Kohlenstoffatome enthält, darstellen,
$R_3$ ein Alkylrest mit 1 bis 4 Kohlenstoffatomen ist,
$R_4$ und $R_5$ Alkylreste, gegebenenfalls halogeniert oder alkoxyliert, mit 1 bis 18 Kohlenstoffatomen sind.

2. Verbindungen nach Anspruch 1, mit der allgemeinen Formel II

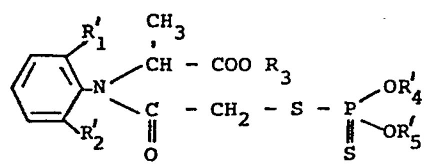

(II)

worin $R'_1$ und $R'_2$ die gleich oder verschieden sein können, ein Halogenatom oder den Methylrest bedeuten, $R_3$ die gleiche Bedeutung wie im Anspruch 1 hat, $R'_4$ und $R'_5$ Alkylreste, gegebenenfalls alkoxyliert, mit 1 bis 18 Kohlenstoffatomen sind, deren verschiedene Kohlenstoffatome lediglich primäre, sekundäre oder tertiäre Kohlenstoffatome sind.

3. Verbindungen nach Anspruch 2 mit der Formel

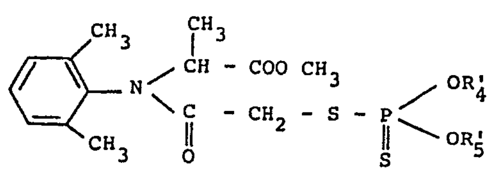

worin $R'_4$ und $R'_5$ einen Alkyl- oder Alkoxyalkylrest mit 2 bis 12 Kohlenstoffatomen bedeuten.

4. Verfahren zur Herstellung der Verbindung von Anspruch 1, dadurch gekennzeichnet, daß man eine Reaktion nach folgendem Schema durchführt,

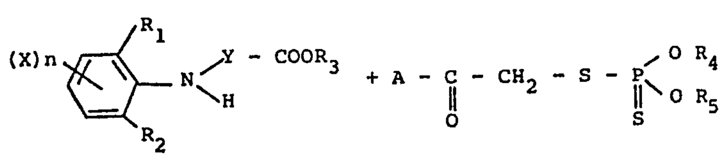

→ (I) + HA
worin A ein Halogenatom oder den Hydroxylrest bedeutet.

5. Verfahren nach Anspruch 4, dadurch gekennzeichnet, daß man die Reaktion nach folgendem Schema durchführt:

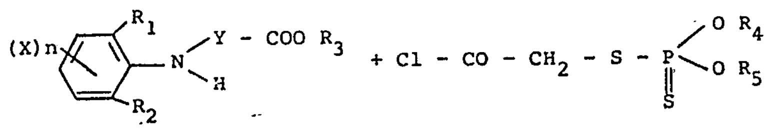

→ (I) + HCl

6. Verfahren zur Herstellung der Verbindungen nach Anspruch 1, dadurch gekennzeichnet, daß man die Reaktion nach folgendem Schema durchführt:

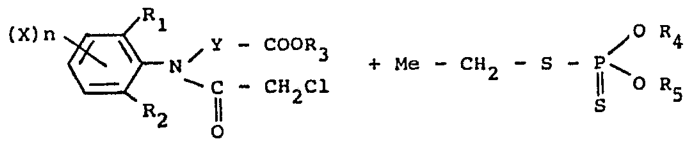

→ (I) +MeCl

worin Me ein Alkalimetallatom oder die Ammoniumgruppe darstellt.

7. Fungizide Zusammensetzung zum Schutz von Pflanzen gegen Pilzerkrankungen, dadurch gekennzeichnet, daß sie als aktives Material eine Verbindung nach einem der Ansprüche 1 bis 3 zusammen mit üblichen inerten Trägern und/oder üblichen oberflächenaktiven Mitteln enthält.

8. Fungizide Zusammensetzung nach Anspruch 7, dadurch gekennzeichnet, daß sie 0,0001 bis 95% der Verbindung nach Anspruch 1 enthält.

9. Verfahren zur Bekämpfung von Pilzerkrankungen der Pflanzen, dadurch gekennzeichnet, daß man eine Zusammensetzung gemäß einem der Ansprüche 7 oder 8 verwendet.

**Claims**

1. A new compound of the general formula:

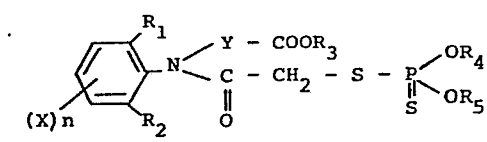

(I)

in which: X is a halogen atom or an alkyl radical containing from 1 to 4 carbon atoms, n is 0, 1, 2, 3, Y is the group $—CH_2—$ or

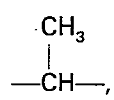

$R_1$ and $R_2$ are separately a halogen atom or an alkyl or alkoxy radical in which the alkyl part contains from 1 to 4 carbon atoms, $R_3$ is an alkyl containing from 1 to 4 carbon atoms and $R_4$ and $R_5$ are optionally halogen-substituted or alkoxy-substituted alkyl radicals containing from 1 to 18 carbon atoms.

2. A compound according to claim 1, of the general formula:

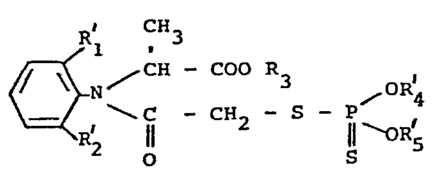

(II)

in which: $R'_1$ and $R'_2$, which are identical or different, are a halogen atom or the methyl radical, $R_3$ is an alkyl containing from 1 to 4 carbon atoms and $R'_4$ and $R'_5$ are optionally alkoxy-substituted alkyl radicals which contain from 1 to 18 carbon atoms and in which the various carbon atoms are only primary or secondary or tertiary carbon atoms.

3. A compound according to claim 2, of the formula:

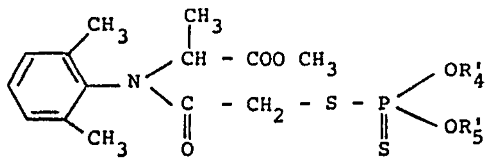

in which: $R'_4$ and $R'_5$ are an alkyl or alkoxyalkyl radical having 2 to 12 carbon atoms.

4. A process for the manufacture of a compound according to claim 1, which comprises carrying out a reaction in accordance with the following equation:

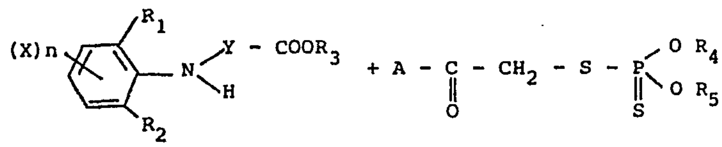

→ (I) + HA

in which A is a halogen atom or the hydroxyl radical.

5. A process according to claim 4, which comprises carrying out a reaction in accordance with the following equation:

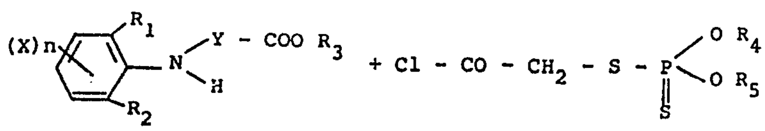

→ (I) + HCl

6. A process for the preparation of a compound according to claim 1, which comprises carrying out a reaction in accordance with the following equation:

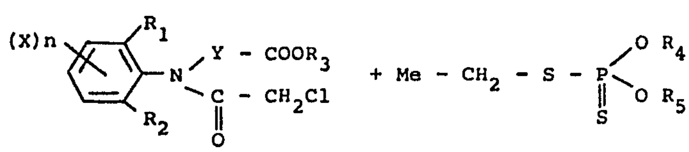

→ (I) + MeCl

in which: Me is an alkali metal atom or the ammonium group.

7. A fungicidal composition for protecting plants against fungal diseases, which contains, as the active ingredient, a compound according to one of claims 1 to 3, in association with the customary inert carriers and/or surface-active agents.

8. A fungicidal composition according to claim 7, which contains from 0.0001 to 95% of the compound according to claim 1.

9. A process for combating fungal diseases in plants, which comprises using a composition according to one of claims 7 or 8.